# EUROPEAN PATENT SPECIFICATION

(11) **EP 4 024 053 B1**
(45) Date of publication and mention of the grant of the patent: **18.03.2026**
(21) Application number: 21209763.8
(22) Date of filing: 23.11.2021
(51) Int. Cl.: G01N 35/10, G01N 35/04

(54) **REAGENT FILLING DEVICE AND SAMPLE ANALYZER WITH REAGENT FILLING DEVICE**
REAGENZFÜLLVORRICHTUNG UND PROBENANALYSATOR MIT REAGENZFÜLLVORRICHTUNG
DISPOSITIF DE REMPLISSAGE DE RÉACTIF ET ANALYSEUR D'ÉCHANTILLON COMPORTANT UN DISPOSITIF DE REMPLISSAGE DE RÉACTIF

(30) Priority: 31.12.2020 CN 202011642583
(43) Date of publication of application: 06.07.2022
(73) Proprietor: Shenzhen New Industries Biomedical Engineering Co., Ltd., Shenzhen, Guangdong 518122 (CN)
(72) Inventor: ZHENG, Xiaolin, Shenzhen 518122 (CN); CHEN, Xiaotao, Shenzhen 518122 (CN); LIN, Ronghua, Shenzhen 518122 (CN); KANG, Lele, Shenzhen 518122 (CN); ZHOU, Guozhong, Shenzhen 518122 (CN)
(74) Representative: Herrero & Asociados, S.L.

(56) References cited:
- EP-A1- 4 109 107
- JP-A- H06 109 744
- US-A- 4 344 768
- US-A1- 2017 227 560
- US-B2- 10 837 975

## Description

### Cross-Reference to Related Application

The disclosure claims the priority of Chinese Patent Application No. 202011642583X, filed to the Chinese Patent Office on December 31, 2020 and entitled "Reagent Filling Device and Sample Analyzer with Reagent Filling Device.

### Technical Field

The disclosure relates to a sample analyzing equipment, and in particular to a reagent filling device and a sample analyzer with the reagent filling device.

### Background

Taking a full-automatic biochemical analyzer as an example, which is an instrument of measuring a specific chemical component in body fluid according to a principle of photoelectric colorimetry, and may mainly include a reagent storage system, a sample adding system, a reaction system, an optical system and a fluid circuit control system. Wherein, a reagent filling device in the sample adding system is indispensable and takes charge of absorbing a reagent from the reagent storage system and adding it to a colorimetric cup in the reaction system. In a high-speed full-automatic biochemical analyzer, double circles of the colorimetric cups are arranged in the reaction system from inside to outside generally, therefore two sets of reagent filling devices respectively corresponding to the inner circle colorimetric cups and the outer circle colorimetric cups are needed. In this way, the reagent is filled independently into the inner circle colorimetric cups and the outer circle colorimetric cups. How to reasonably design two sets of reagent filling devices to improve working efficiency of the instrument and reduce an occupied space of parts has always been a technical bottleneck that the high-speed automatic biochemical analyzer faces.

Three reagent filling devices are provided in the related art, and limitations are as follows respectively.
1. A reagent filling device moving circularly and moving up and down is characterized in that two arm components are arranged on the same side, and the two arm components may move at the same time only and finish filling of the reagent in the same direction and the same angle. The two arm components may not move independently, and the working efficiency is low.
2. The reagent filling device moving circularly and moving up and down is characterized in that a center of rotation of its horizontal circular motion is positioned on its structural body only. Two arm components need to be oppositely arranged in order that the two arm components may move independently without interfering with each other. However, a large area of plane of the instrument may be occupied due to an opposite arrangement, and a whole machine may occupy a large area inevitably. Moreover, due to the opposite arrangement, an angle of rotation of the arm component may be greater than 180° when moving and a horizontal motion track is long, accordingly a higher requirement on a motion load to be driven is put forward within a limited sample adding cycle of the high-speed automatic biochemical analyzer.
3. A reagent filling device of performing X, Y and Z three-dimensional movement is further provided in the related art, and the reagent filling device may take a sample and the reagent within a rectangle area at any position. But identically, the reagent filling device has a big volume and occupies a large area of plane of the instrument, and accordingly it is not conducive to layout of the whole machine. Moreover, the reagent filling device is complicated in structure, it is easy to make a mistake in control of software, the cost is high, and it is hard to popularize.

Examples of a reagent filling device and a sample analyzer according to the prior art are known from US4344768A, US10837975B2, or JP H06109744A.

### Summary

A main objective of the disclosure is to provide a reagent filling device and a sample analyzer with the reagent filling device, as to solve the problem that a reagent filling device of a sample analyzer in the related art may not take into account both independent motion and space occupation.

The invention is as defined in claim 1.

To achieve the abovementioned objective, according to an aspect of the disclosure, a reagent filling device is provided. The reagent filling device may include a base, a horizontal rotation component, a vertical lifting component and a cantilever component. Wherein, the horizontal rotation component is connected with the base, the vertical lifting component is connected with the horizontal rotation component, and the vertical lifting component is movable in a vertical direction relative to the base, the cantilever component is connected with the vertical lifting component, the vertical lifting component may drive the cantilever component to move along the vertical direction, and the cantilever component is rotatably arranged relative to the vertical lifting component. There are a plurality of cantilever components, and the plurality of cantilever components are arranged in a staggered manner along a vertical direction, the plurality of cantilever components being arranged on a same side. The cantilever component may include a cantilever body, and a length of the cantilever body of at least one cantilever component of the plurality of cantilever components is greater than a length of a cantilever body of each of the rest cantilever components of the plurality of cantilever components. The each cantilever component is configured to add a reagent in a reagent disc to a reaction cup in a reaction disc.

According to the invention, there are a plurality of horizontal rotation components and plurality of vertical lifting components. The plurality of horizontal rotation components are arranged corresponding to the plurality of vertical lifting components one by one, and the each cantilever component is provided with one horizontal rotation component and one vertical lifting component correspondingly.

According to the invention, a projection of a center of rotation of the cantilever component on a horizontal plane is positioned in the reagent disc.

In some embodiments, the vertical lifting component may include a lifting body, a first transmission portion, a second transmission portion, a transmission part and a transmission shaft, wherein, the first transmission portion is arranged on a first end of the lifting body, the first transmission portion is connected with the horizontal rotation component, the second transmission portion is arranged on a second end of the lifting body, and the cantilever component is connected with the second transmission portion. A first end of the transmission part is connected with the first transmission portion, a second end of the transmission part is connected with the second transmission portion, and the horizontal rotation component transmits power to the second transmission portion through the first transmission portion and the transmission part, as to drive the cantilever component to rotate. The second transmission portion is connected with the transmission shaft, the cantilever component is connected with another end of the transmission shaft, and an axis center of the transmission shaft is the center of rotation of the cantilever component.

In some embodiments, the transmission shaft may include: a first transmission shaft and a second transmission shaft, and a length of the first transmission shaft being greater than a length of the second transmission shaft.

In some embodiments, the transmission part is a transmission belt, or the transmission part is a rack or a chain.

In some embodiments, the horizontal rotation component may include a first drive portion and a ball spline shaft, wherein, the first drive portion is connected with the base, the ball spline shaft is connected with the first drive portion, the first transmission portion is sleeved on a peripheral side of the ball spline shaft, and the first drive portion is configured to drive the ball spline shaft to rotate, in this way the ball spline shaft drives the first transmission portion to rotate.

In some embodiments, the vertical lifting component may include a second drive portion, a ball screw and a screw nut, wherein, the second drive portion is connected with the base, the ball screw is connected with the second drive portion, the screw nut is sleeved on a peripheral side of the ball screw and connected with the lifting body, and the second drive portion may drive the lifting body to drive the cantilever component to move along the vertical direction.

In some embodiments, the lifting body is provided with an assembling hole for mounting the screw nut, and the assembling hole is positioned between the first transmission portion and the second transmission portion.

In some embodiments, the first transmission portion may include a first sleeve, the first sleeve is sleeved on the ball spline shaft, the first sleeve is connected with the lifting body, and the transmission part is connected with the first sleeve. When the second drive portion drives the lifting body to move along the vertical direction, the lifting body drives the first sleeve to move relative to the ball spline shaft along the vertical direction. When the first drive portion drives the ball spline shaft to rotate, the ball spline shaft drives the first sleeve to rotate horizontally relative to the lifting body, as to drive the cantilever component to rotate through the transmission part.

In some embodiments, a peripheral surface of the first sleeve is fixedly provided with a second sleeve, the first sleeve is connected with the lifting body through the second sleeve, an end of the second sleeve is connected with the transmission part, and the first sleeve and the second sleeve are rotatably arranged relative to the lifting body.

In some embodiments, a peripheral surface of the second sleeve is provided with engaging teeth in cooperation with the transmission part.

In some embodiments, the second transmission portion may include a transmission disc, the transmission disc is moveably connected with the lifting body, the transmission disc is connected with the transmission shaft, a peripheral surface of the transmission disc is provided with engaging teeth in cooperation with the transmission part, and the transmission disc may drive the transmission shaft to rotate.

In some embodiments, a first end of the cantilever body is connected with the transmission shaft, the cantilever component may further include an anti-collision mechanism and a reagent needle, wherein, the anti-collision mechanism is connected with a second end of the cantilever body, and the reagent needle is connected with the anti-collision mechanism.

In some embodiments, the reagent disc has a plurality of circles of reagent bottles along its radial direction, the reaction disc has a plurality of circles of reaction cups along its radial direction, and the cantilever component is configured to add the reagent in each layer of the reagent bottles to the reaction cups in the reaction disc.

In some embodiments, the plurality of circles of reagent bottles may include at least two circles of reagent bottles, and the two circles of reagent bottles may include inner circle reagent bottles and outer circle reagent bottles. The plurality of circles of reaction cups may include at least two circles of reaction cups, and the two circles of reaction cups may include inner circle reaction cups and outer circle reaction cups. The cantilever component may include a first cantilever component and a second cantilever component, and a length of a cantilever body of the first cantilever component is greater than a length a cantilever body of the second cantilever component. The first cantilever component is configured to add the reagent in the inner circle reagent bottle to at least one of the inner circle reaction cups and the outer circle reaction cups, and the second cantilever component is configured to add the reagent in the outer circle reagent bottle to at least one of the inner circle reaction cups and the outer circle reaction cups. Or, the first cantilever component is configured to add the reagent in the outer circle reagent bottle to at least one of the inner circle reaction cups and the outer circle reaction cups, and the second cantilever component is configured to add the reagent in the inner circle reagent bottle to at least one of the inner circle reaction cups and the outer circle reaction cups.

In some embodiments, an angle of rotation a of the first cantilever component satisfies: 0<a≤ 120°, and/or, an angle of rotation b of the second cantilever component satisfies: 0<b≤90°.

In some embodiments, the vertical lifting component may further include a supporting shaft sleeve, and the supporting shaft sleeve is configured to support the first cantilever component.

According to the invention, a sample analyzer is provided. The sample analyzer includes the abovementioned reagent filling device.

In some embodiments, the reagent filling device may include a plurality of reagent discs and the reagent filling devices arranged corresponding to the plurality of reagent discs one by one.

With the adoption of the technical solution of the disclosure, a structure of the reagent filling device of the sample analyzer is optimized, in this way the reagent filling device has the horizontal rotation component, the vertical lifting component and the cantilever component. The cantilever components are gathered together, thereby greatly reducing an occupied space. The cantilever components are staggered up and down, and a long cantilever and a short cantilever are designed, in this way the plurality of cantilever components move independently in a horizontal direction and a vertical direction, the reagent may be absorbed from the inner circle and the outer circle of the reagent disc, no interference will be caused, and working efficiency will be improved.

### Brief Description of the Drawings

The accompanying drawings, which constitute a part of the present disclosure, are used to provide a further understanding of the disclosure, and the exemplary embodiments of the disclosure and the description thereof are used to explain the disclosure, but do not constitute improper limitations to the disclosure. In the drawings:
Fig. 1 shows a layout diagram of a reagent filling device, a reagent disc and a reaction disc of an optional embodiment 1 according to the disclosure.

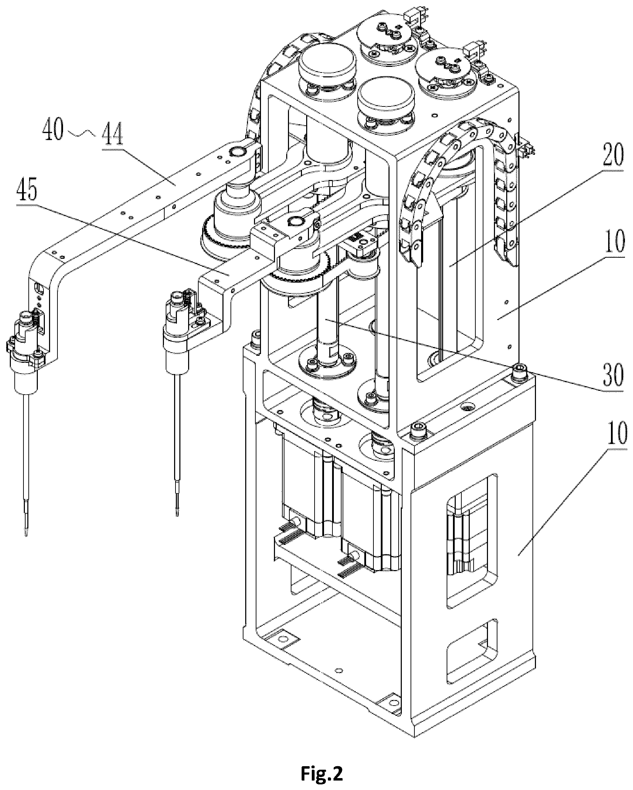

Fig. 2 shows a structure diagram of a reagent filling device in Fig. 1.
Fig. 3 shows a section view of a reagent filling device in Fig. 2 from another angle of view.
Fig. 4 shows an amplified structure diagram of a position A in Fig. 3.
Fig. 5 shows a structure diagram of a cantilever component of a reagent filling device in Fig. 3.
Fig. 6 shows a structure diagram of assembling a lifting body of a vertical lifting component in Fig. 4 with a first transmission section and a second transmission section.
Fig. 7 shows a structure diagram of a first cantilever component of a reagent filling device in Fig. 3.
Fig. 8 shows another structure diagram of a cantilever component of a reagent filling device in Fig. 3.
Fig. 9 shows another structure diagram of assembling a lifting body of a vertical lifting component in Fig. 4 with a first transmission section and a second transmission section.
Fig. 10 shows a structure diagram of a second cantilever component of a reagent filling device in Fig. 3.

Wherein, the abovementioned drawings may include the following reference numbers.
1. Reagent disc; 2. Reaction disc; 3. Reagent filling device; 1022. Coupler; 1023. Supporting bearing; 402. Line -base fixed plate; 10. Base; 20. Horizontal rotation component; 30. Vertical lifting component; 40. Cantilever component; 100. Reaction cup; 31. Lifting body; 32. First transmission portion; 33. Second transmission portion; 34. Transmission belt; 35. Transmission shaft; 351. First transmission shaft; 352. Second transmission shaft; 212. First drive portion; 212. Ball spline shaft; 36. Second drive portion; 37. Ball screw; 38. Screw nut; 39. Assembling hole; 321. First sleeve; 322. Second sleeve; 3221. Bearing; 3222. Bond; 331. Transmission disc; 41. Cantilever body; 42. Anti-collision mechanism; 43. Reagent needle; 200. Reagent bottle; 44. First cantilever component; 45. Second cantilever component; 47. Supporting shaft sleeve.

### Detailed Description of the Embodiments

It is to be noted that embodiments in the disclosure and features in the embodiments may be combined with each other without conflict. The disclosure will be described below in detail with reference to drawings and in combination with the embodiments.

It should be noted that terms used wherein are merely intended to describe specific embodiments rather than limit exemplary embodiments according to the disclosure. Unless otherwise pointed out explicitly, a singular form used wherein is also intended to include a plural form. In addition, it should also be understood that the term "include" and/or "comprise" used in the description indicates that there are features, steps, operations, devices, assemblies and/or combinations thereof.

It is to be noted that terms "first", "second" and the like in the description, claims and the abovementioned drawings of the disclosure are adopted not to describe a specific sequence but to distinguish similar objects. It should be understood that the terms used in such a way may be exchanged where appropriate, in order that the embodiments of the disclosure described here can be implemented in a sequence other than sequences graphically shown or described here. In addition, terms "include" and "have" and any variations thereof are intended to cover non-exclusive inclusions. For example, it is not limited for processes, methods, systems, products or devices containing a series of steps or units to clearly list those steps or units, and other steps or units which are not clearly listed or are inherent to these processes, methods, products or devices may be included instead.

Now, the exemplary embodiments according to the disclosure will be described below in detail with reference to drawings. However, these exemplary embodiments may be implemented in many different ways and should not be explained to limit the embodiments elaborated wherein. It should be understood that these embodiments are provided to make the disclosure thoroughly and integrally disclosed, and sufficiently pass a conception of the exemplary embodiments to those of ordinary skill in the art. In the drawings, for clarity, thicknesses of a layer and an area may be enlarged, and identical reference numbers are used to mark identical devices. Therefore, descriptions thereof are omitted.

To solve the problem that a reagent filling device of a sample analyzer in the related art occupies a large area, the disclosure provides a reagent filling device and a sample analyzer, wherein, the sample analyzer includes the reagent filling device 3.

Further, the sample analyzer includes a plurality of reagent discs 1 and the reagent filling devices 3 arranged corresponding to the plurality of reagent discs 1 one by one.

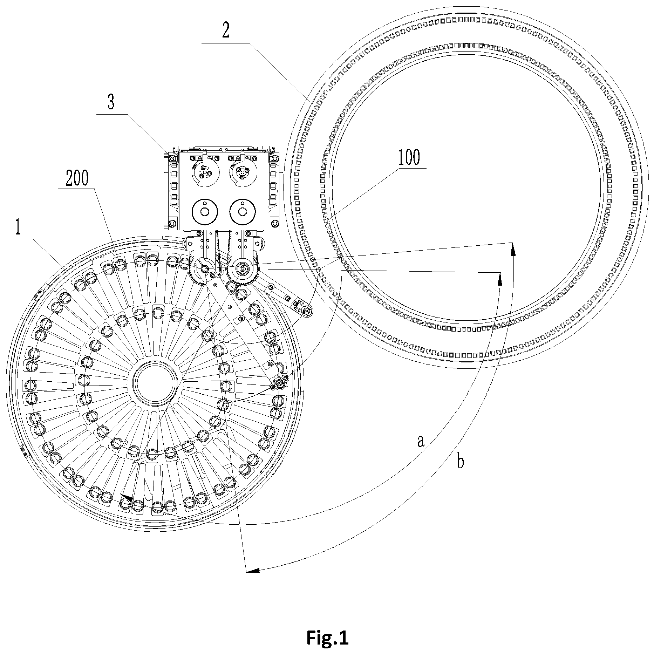

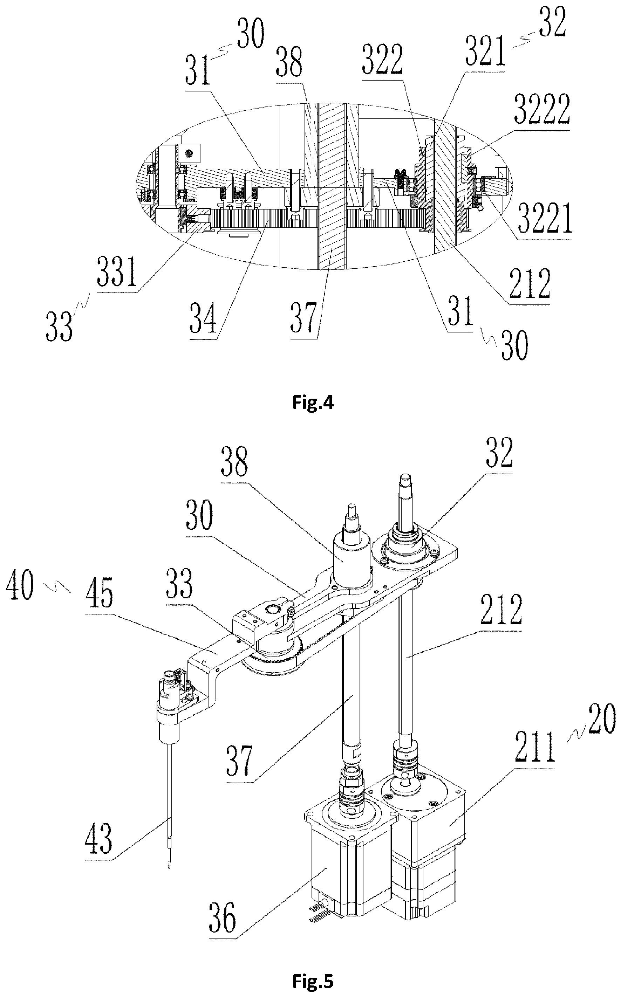

Specifically, as shown in Fig. 1to Fig. 5, the reagent filling device 3 in the disclosure may include a base 10, a horizontal rotation component 20, a vertical lifting component 30 and a cantilever component 40. Wherein, the horizontal rotation component 20 is connected with the base 10, the vertical lifting component 30 is connected with the horizontal rotation component 20 and connected with the base 10 as well, and the vertical lifting component 30 may move in a vertical direction relative to the base 10. The cantilever component 40 is connected with the vertical lifting component 30, and the vertical lifting component 30 may drive the cantilever component 40 to move along a vertical direction. Moreover, the cantilever component 40 is rotatably arranged relative to the vertical lifting component 30, a projection of a center of rotation of the cantilever component 40 on a horizontal plane is positioned in the reagent disc 1, and the cantilever component 40 is configured to add a reagent in the reagent disc 1 to a reaction cup 100 in a reaction disc 2.

Through optimizing a structure of the reagent filling device of the sample analyzer, the reagent filling device has the horizontal rotation component 20, the vertical lifting component 30 and the cantilever component 40, wherein, the cantilever component 40 is connected with the vertical lifting component 30 and the horizontal rotation component 20, the cantilever component 40 may rotate relative to the vertical lifting component 30, and the projection of the center of rotation of the cantilever component 40 on the horizontal plane is positioned in the reagent disc 1. In this way, on one hand, when adding the reagent in the reagent disc 1 to the reaction cup 100 in the reaction disc 2, the cantilever component 40 needs to rotate for a small angle only and addition of the reagent may be realized, thereby greatly reducing an angle of rotation of the cantilever component 40. On the other hand, it is conducive to reducing a cantilever length of the cantilever component 40, accordingly it is conducive to designing the compact reagent filling device, the reagent filling device is ensured to have a small overall volume, and further the reagent filling device is guaranteed not to occupy a big mounting space. In addition, due to the small angle of rotation of the cantilever component 40, that it is conducive to lowering a requirement on a motion load of a motor within a limited sample adding period of the sample analyzer is ensured.

It is to be noted that the cantilever components are gathered together in the disclosure, thereby greatly reducing the mounting space. The cantilever components are staggered up and down, and a long cantilever and a short cantilever are designed, in this way the plurality of cantilever components may move independently in a horizontal direction and a vertical direction, and the reagent may be absorbed from the inner circle and the outer circle of the reagent disc, no interference will be caused, and working efficiency will be improved. Moreover, the center of rotation is positioned outside, in this way the cantilever component needs to rotate for a small angle only and addition of the reagent may be realized, and accordingly the angle of rotation of the cantilever component is greatly reduced, and the occupied space is reduced.

It is to be noted that the reagent in the reagent disc 1 in the disclosure may be a sample, a cleaning solution, etc.

As shown in Fig. 5, Fig. 6, Fig. 8 and Fig. 9, the vertical lifting component 30 includes a lifting body 31, a first transmission portion 32, a second transmission portion 33 and a transmission part. Wherein, the first transmission portion 32 is arranged on a first end of the lifting body 31, and the first transmission portion 32 is connected with the horizontal rotation component 20. The second transmission portion 33 is arranged on a second end of the lifting body 31, the cantilever component 40 is connected with the second transmission portion 33, a first end of the transmission part is connected with the first transmission portion 32, a second end of the transmission part is connected with the second transmission portion 33, the horizontal rotation component 20 transmits power to the second transmission portion 33 through the first transmission portion 32 and the transmission part, as to drive the cantilever component 40 to rotate.

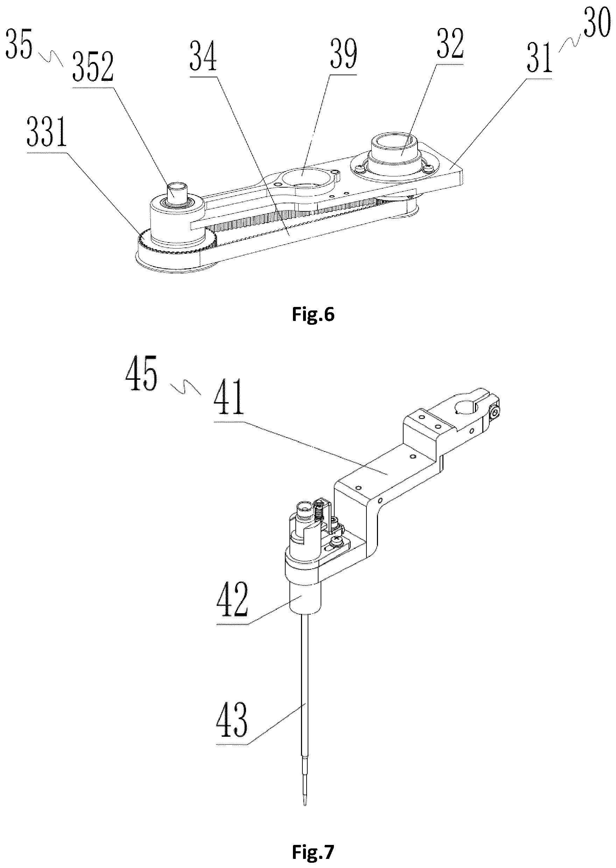

As shown in Fig. 6, the transmission part is a transmission belt 34.

Optionally, in an embodiment not shown in the disclosure, the transmission part is a rack or a chain.

As shown in Fig. 5, Fig. 6, Fig. 8 and Fig. 9, the vertical lifting component 30 includes a transmission shaft 35, the second transmission portion 33 is connected with the transmission shaft 35, the cantilever component 40 is connected with the transmission shaft 35, and an axis center of the transmission shaft 35 is the center of rotation of the cantilever component 40. In this way, the projection of the center of rotation of the cantilever component 40 in a vertical direction is ensured to be positioned in the reagent disc 1, and accordingly it is conducive to reducing the angle of rotation of the cantilever component 40.

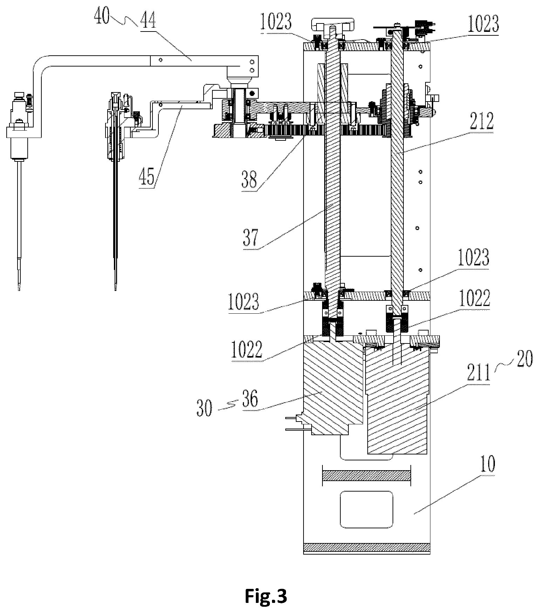

To ensure that the cantilever component 40 absorbs the reagent in the reagent disc 1, as shown in Fig. 3 to Fig. 5, the vertical lifting component 30 includes a second drive portion 36, a ball screw 37 and a screw nut 38, wherein, the second drive portion 36 is connected with the base 10, the ball screw 37 is connected with the second drive portion 36, the screw nut 38 is sleeved on a peripheral side of the ball screw 37 and connected with the lifting body 31, and the second drive portion 36 drives the lifting body 31 to drive the cantilever component 40 to move along the vertical direction. In this way, the second drive portion 36 drives the ball screw 37 to rotate, and accordingly the screw nut 38 is driven to move in an axial direction of the ball screw 37. A mode of rotation is transformed as motion in the vertical direction, and motion stability of the cantilever component 40 may be ensured as well. Accordingly, the cantilever component 40 is guaranteed to be able to move downward to close to the reagent in the reagent disc 1 and absorb the reagent.

As shown in Fig. 3, the ball screw 37 is mounted on a supporting frame of the base 10 through supporting bearings 1023 arranged one above the other, and connected with the second drive portion 36 through a coupler 1022.

Optionally, the vertical lifting component 30 is not limited to transmission modes of the ball screw 37 and the screw nut 38, and may include a trapezoidal screw, a synchronous belt or a chain, etc. as well.

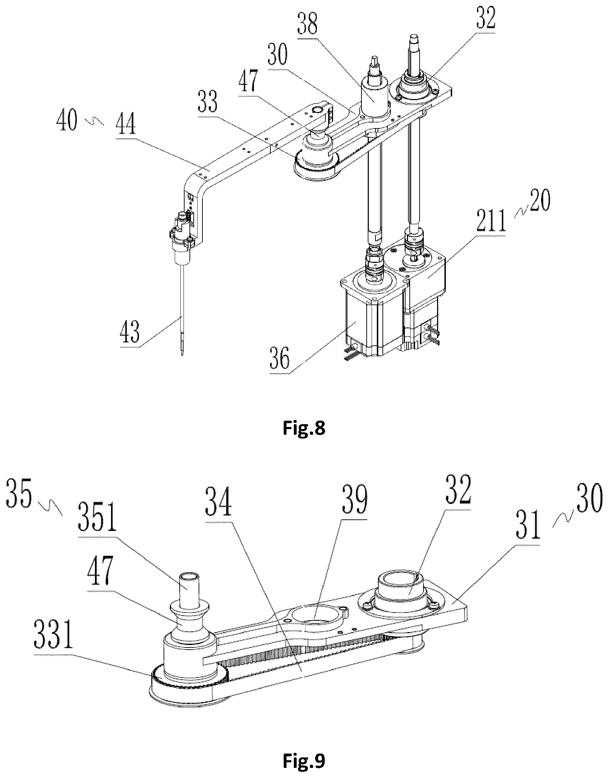

As shown in Fig. 6 and Fig. 9, the lifting body 31 is provided with an assembling hole 39 configured to mount the screw nut 38, and the assembling hole 39 is positioned between the first transmission portion 32 and the second transmission portion 33. In this way, arrangement of the assembling hole 39 ensures mounting reliability of the lifting body 31, and accordingly mounting reliability of the connection between the cantilever component 40 and the lifting body 31 is guaranteed.

As shown in Fig. 3 to Fig. 5 and Fig. 8, the horizontal rotation component 20 includes a first drive portion 211 and a ball spline shaft 212, wherein, the first drive portion 211 is connected with the base 10, the ball spline shaft 212 is connected with the first drive portion 211, the first transmission portion 32 is sleeved on a peripheral side of the ball spline shaft 212, the first drive portion 211 is configured to drive the ball spline shaft 212 to rotate so that the ball spline shaft 212 drives the first transmission portion 32 to rotate. In this way, transmission stability of the horizontal rotation component 20 is ensured, and accordingly rotation stability of the first transmission portion 32 is guaranteed.

As shown in Fig. 3 and Fig. 4, the first transmission portion 32 may include a first sleeve 321, the first sleeve 321 is sleeved on the ball spline shaft 212, the first sleeve 321 is connected with the lifting body 31, the transmission part is connected with the first sleeve 321, the first sleeve 321 is rotatably arranged relative to the lifting body 31, an outer surface of the ball spline shaft 212 is provided with a groove, balls are arranged between an inner surface of the first sleeve 321 and the ball spline shaft 212, and a part of the balls are positioned in the groove. When the second drive portion 36 drives the lifting body 31 to move along the vertical direction, the lifting body 31 drives the first sleeve 321 to move relative to the ball spline shaft 212 along a vertical direction. When the first drive portion 211 drives the ball spline shaft 212 to rotate, the ball spline shaft 212 drives the first sleeve 321 through the balls to rotate horizontally relative to the lifting body 31, as to drive the cantilever component 40 to rotate through the transmission part. In this way, the cantilever component 40 is ensured to move in the vertical direction and rotate in the horizontal direction as well, and accordingly it is conducive to improving filling efficiency of the reagent filling device.

As shown in Fig. 3, the ball spline shaft 212 is mounted on the supporting frame of the base 10 through supporting bearings 1023 arranged one above the other, and connected with the first drive portion 211 through the coupler 1022.

As shown in Fig. 4, a peripheral surface of the first sleeve 321 is fixedly provided with a second sleeve 322, the first sleeve 321 is connected with the lifting body 31 through the second sleeve 322, an end of the second sleeve 322 is connected with the transmission part, the second sleeve 322 is connected with the lifting body 31 through a bearing 3221, the first sleeve 321 is connected with the second sleeve 322 through a bond 3222, and the first sleeve 321 and the second sleeve 322 are rotatably arranged through the bearing 3221 relative to the lifting body 31. In this way, rotation stability of the first sleeve 321 and the second sleeve 322 is ensured.

Optionally, a peripheral surface of the second sleeve 322 is provided with engaging teeth in cooperation with the transmission part. In this way, transmission between the second sleeve 322 and the transmission part is realized through a belt pulley, and transmission stability of the second sleeve 322 and the transmission part is ensured, It is conducive to designing the compact reagent filling device, and transmission stability of the second sleeve 322 and the transmission part is guaranteed as well.

As shown in Fig. 6 and Fig. 9, the second transmission portion 33 includes a transmission disc 331, the transmission disc 331 is moveably connected with the lifting body 31, the transmission disc 331 is connected with the transmission shaft 35, a peripheral surface of the transmission disc 331 is provided with engaging teeth in cooperation with the transmission part, and the transmission disc 331 may drive the transmission shaft 35 to rotate. In this way, transmission between the transmission disc 331 and the transmission part is realized through a belt pulley, transmission stability of the transmission disc 331 and the transmission part is ensured. It is conducive to designing the compact reagent filling device, and transmission stability of the transmission disc 331 and the transmission part is guaranteed as well.

As shown in Fig. 6 and Fig. 9, the transmission shaft 35 includes a first transmission shaft 351 and a second transmission shaft 352, a length of the first transmission shaft 351 is greater than a length of the second transmission shaft 352, in this way a plurality of cantilever components 40 are ensured to form a difference of height in a vertical direction, and interference is avoided. Or the plurality of cantilever components 40 are connected with two ends of the transmission shaft 35 respectively, thereby ensuring that there is an enough difference of height in the vertical direction, and avoiding the interference.

As shown in Fig. 5 and Fig. 7, the cantilever component 40 includes a cantilever body 41, an anti-collision mechanism 42 and a reagent needle 43, wherein, a first end of the cantilever body 41 is connected with the second transmission shaft 352, the anti-collision mechanism 42 is connected with a second end of the cantilever body 41, and the reagent needle 43 is connected with the anti-collision mechanism 42. In this way, mounting stability of the cantilever component 40 is ensured, the anti-collision mechanism 42 plays a role of preventing the reagent needle 43 from collision. Accordingly, a situation in which the cantilever components 40 may not finish absorption of the reagent as a result of damage due to collision of the reagent needle 43 is avoided.

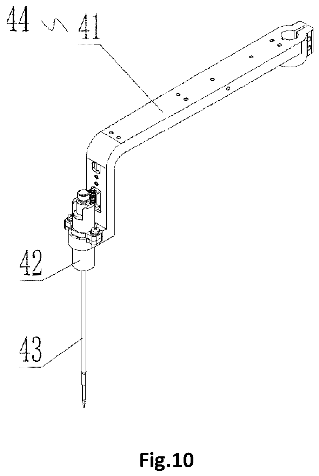

As shown in Fig. 8 and Fig. 10, the cantilever component 40 includes a cantilever body 41, an anti-collision mechanism 42 and a reagent needle 43, wherein, a first end of the cantilever body 41 is connected with the first transmission shaft 351, the anti-collision mechanism 42 is connected with a second end of the cantilever body 41, and the reagent needle 43 is connected with the anti-collision mechanism 42. In this way, mounting stability of the cantilever component 40 is ensured, the anti-collision mechanism 42 plays a role of preventing the reagent needle 43 from collision. Accordingly, a situation in which the cantilever components 40 may not finish absorption of the reagent as a result of damage due to collision of the reagent needle 43 is avoided.

Optionally, there are a plurality of cantilever components 40, and the plurality of cantilever components 40 are arranged in a staggered manner along the vertical direction, the plurality of cantilever components 40 being arranged on a same side, each cantilever component 40 is correspondingly provided with one horizontal rotation component 20 and one vertical lifting component 30. In this way, all cantilever components 40 are ensured not to interfere with each other when absorbing or adding the reagent, and accordingly adding reliability of the reagent filling device is guaranteed. In addition, the plurality of cantilever components 40 are conducive to improving adding efficiency of the reagent filling device.

Optionally, a length of the cantilever body 41 of at least one cantilever component 40 of the plurality of cantilever components 40 is greater than a length of the cantilever body 41 of the rest cantilever components 40. In this way, all cantilever components 40 are ensured not to interfere with each other when absorbing or adding the reagent.

Optionally, the reagent disc 1 has a plurality of circles of reagent bottles 200 along its radial direction, the reaction disc 2 has a plurality of circles of reaction cups 100 along its radial direction, and the cantilever component 40 is configured to add the reagent in each circle of the reagent bottles 100 to the reaction cups 100 in the reaction disc 2. In this way, it is conducive to improving the filling efficiency of the reagent filling device.

As shown in Fig. 1, the plurality of circles of reagent bottles 200 includes at least two circles of reagent bottles, and the two circles of reagent bottles include inner circle reagent bottles and outer circle reagent bottles. The plurality of circles of reaction cups 100 include at least two circles of reaction cups, and the two circles of reaction cups include inner circle reaction cups and outer circle reaction cups. The plurality of cantilever components 40 include a first cantilever component 44 and a second cantilever component 45, the first cantilever component 44 is connected with an end of the first transmission shaft 351, an axis center of the first transmission shaft 351 is a center of rotation of the first cantilever component 44, the second cantilever component 45 is connected with an end of the second transmission shaft 352, an axis center of the second transmission shaft 352 is a center of rotation of the second cantilever component 40, a length of a cantilever body 41 of the first cantilever component 44 is greater than a length of the cantilever body 41 of the second cantilever component 45, and there is a difference of height between the first cantilever component 44 and the second cantilever component 45 in a vertical direction. The first cantilever component 44 is configured to add the reagent in the inner circle reagent bottle to the inner circle reaction cups, and the second cantilever component 45 is configured to add the reagent in the outer circle reagent bottle to the outer circle reaction cups. Or, the first cantilever component 44 is configured to add the reagent in the inner circle reagent bottle to the outer circle reaction cups, and the second cantilever component 45 is configured to add the reagent in the outer circle reagent bottle to the inner circle reaction cups. Or, the first cantilever component 44 is configured to add the reagent in the outer circle reagent bottle to the inner circle reaction cups, and the second cantilever component 45 is configured to add the reagent in the inner circle reagent bottle to the outer circle reaction cups. Or, the first cantilever component 44 is configured to add the reagent in the outer circle reagent bottle to the outer circle reaction cups, and the second cantilever component 45 is configured to add the reagent in the inner circle reagent bottle to the inner circle reaction cups. In this way, bearing stability of the reagent disc 1 and the reaction disc 2 are ensured, and it is conducive to improving the filling efficiency of the reagent filling device as well.

As shown in Fig. 9, the vertical lifting component 30 further includes a supporting shaft sleeve 47, configured to support the first cantilever component 44, in this way the difference of height between the first cantilever component 44 and the second cantilever component 45 is increased and interference is avoided. In the disclosure, the projection of the center of rotation of the cantilever component 40 on the horizontal plane is positioned in the reagent disc 1 and positioned outside the cantilever component. Through optimizing centers of rotation of the first cantilever component 44 and the second cantilever component 45, angles of rotation of the first cantilever component 44 and the second cantilever component 45 are greatly reduced, as shown in Fig. 1, the angle of rotation a of the first cantilever component 44 satisfies: 0<a≤120°, and/or, the angle of rotation b of the second cantilever component 45 satisfies: 0<b≤90°. The cantilever component needs to rotate a small angle and addition of the reagent may be realized, and accordingly the occupied space is greatly reduced.

it is to be noted that the sample analyzer in the disclosure may be a chemiluminescent analyzer, a coagulation analyzer, a haemacytometer analyzer, etc.

In order to facilitate description, a spatial relative term may be used here, such as "over", "above", "on an upper surface" and "on", to describe a spatial location relation between a device or a feature shown in the drawing and other devices or other features. It is to be understood that the spatial relative term aims at including different orientations of the device during use or operation outside the orientation described in the drawing. For example, if the device in the drawing is inverted, it may be described as that the device "above other devices or other structures" or "over other devices or other structures" shall be positioned "under other devices or other structures" or "below other devices or other structures". Therefore, an exemplary term "above" may include two orientations:"above" and "under". As an alternative, the device may be positioned with other different modes (90° rotation or positioned at other orientations), and the spatial relative description used here needs to be explained correspondingly.

Beside the above, it should be further noted that "one embodiment", "another embodiment", "embodiment" and the like mentioned in the description mean that specific features, structures or characteristics described in connection with the embodiment are included in at least one embodiment described generally in the disclosure. Identical expression occurring in many places in the description does not necessarily refer to the same embodiment. And further, when describing one specific feature, structure or characteristic in connection with any embodiment, what is claimed is that realization of the feature, structure or characteristic in connection with other embodiments should fall within the scope of the disclosure.

In the abovementioned embodiments, the description of the each embodiment has particular emphasis, and the relevant description of other embodiments may be used for reference in case of parts not detailed in one embodiment.

The above is only preferred embodiments of the disclosure and is not intended to limit the disclosure. Those skilled in the art may make various modifications and variations.

## Claims

1. A sample analyzer, comprising a reagent filling device (3), a reagent disc (1) and a reaction disc (2) having at least one reaction cup (100), wherein the reaction disc is arranged outside of the reagent disc; the reagent filling device comprising:
a base (10);
a horizontal rotation component (20), the horizontal rotation component (20) being connected with the base (10);
a vertical lifting component (30), the vertical lifting component (30) being connected with the horizontal rotation component (20), and the vertical lifting component (30) being movable in a vertical direction relative to the base (10); and
a cantilever component (40), the cantilever component (40) being connected with the vertical lifting component (30), the vertical lifting component (30) being able to drive the cantilever component (40) to move along the vertical direction, the cantilever component (40) being rotatably arranged relative to the vertical lifting component (30);
there being a plurality of cantilever components (40), and the plurality of cantilever components (40) being arranged in a staggered manner along the vertical direction, and the plurality of cantilever components (40) being arranged on a same side of the vertical lifting component (30); each cantilever component (40) comprising a cantilever body (41), a length of the cantilever body (41) of at least one cantilever component (40) of the plurality of cantilever components (40) being greater than a length of a cantilever body (41) of each of the rest cantilever components (40) of the plurality of cantilever components (40), and the each cantilever component (40) being configured to add a reagent in a reagent disc (1) to a reaction cup (100) in a reaction disc (2);
the plurality of cantilever components (40) comprises a first cantilever component (44) and a second cantilever component (45), and a length of a cantilever body (41) of the first cantilever component (44) is greater than a length of a cantilever body (41) of the second cantilever component (45), a height between the first cantilever component (44) and the second cantilever component (45) in a vertical direction is different;
wherein, there are a plurality of horizontal rotation components (20) and a plurality of vertical lifting components (30); the plurality of horizontal rotation components (20) are arranged corresponding to the plurality of vertical lifting components (30) one by one; and the each cantilever component (40) is provided with one horizontal rotation component (20) and one vertical lifting component (30) correspondingly;
**characterized in that**
a projection of a center of rotation of the cantilever component (40) on a horizontal plane is positioned in the reagent disc (1).

2. The sample analyzer as claimed in claim 1, wherein, the vertical lifting component (30) comprises:
a lifting body (31), a first end of the lifting body (31) being connected with the horizontal rotation component (20), another end of the lifting body (31) being connected with the cantilever component (40), and the cantilever component (40) realizing rotation through the lifting body (31).

3. The sample analyzer as claimed in claim 2, wherein, the vertical lifting component (30) comprises:
a first transmission portion (32), the first transmission portion (32) being arranged on a first end of the lifting body (31), and the first transmission portion (32) being connected with the horizontal rotation component (20);
a second transmission portion (33), the second transmission portion (33) being arranged on a second end of the lifting body (31), and the cantilever component (40) being connected with the second transmission portion (33); and
a transmission part, a first end of the transmission part being connected with the first transmission portion (32), a second end of the transmission part being connected with the second transmission portion (33), the horizontal rotation component (20) transmitting power to the second transmission portion (33) through the first transmission portion (32) and the transmission part, as to drive the cantilever component (40) to rotate.

4. The sample analyzer as claimed in claim 3, wherein, the vertical lifting component (30) further comprises:
a transmission shaft (35), the second transmission portion (33) being connected with an end of the transmission shaft (35), the cantilever component (40) being connected with another end of the transmission shaft (35), and an axis center of the transmission shaft (35) is the center of rotation of the cantilever component (40).

5. The sample analyzer as claimed in claim 4, wherein, the transmission shaft (35) comprises:
a first transmission shaft (351) and a second transmission shaft (352), and a length of the first transmission shaft (351) being greater than a length of the second transmission shaft (352).

6. The sample analyzer as claimed in claim 3, wherein, the horizontal rotation component (20) comprises:
a first drive portion (211), the first drive portion (211) being connected with the base (10); and
a drive shaft, the drive shaft being connected with the first drive portion (211), the first transmission portion (32) being sleeved on a peripheral side of the drive shaft, the first drive portion (211) being configured to drive the drive shaft to rotate, in this way the drive shaft drives the first transmission portion (32) to rotate.

7. The sample analyzer as claimed in claim 3, wherein, the lifting body (31) is provided with an assembling hole (39), and the assembling hole (39) is positioned between the first transmission portion (32) and the second transmission portion (33).

8. The sample analyzer as claimed in claim 7, wherein, the vertical lifting component (30) comprises:
a second drive portion (36), the second drive portion (36) being connected with the base (10);
a ball screw (37), the ball screw (37) being connected with the second drive portion (36); and
a screw nut (38), the screw nut (38) being sleeved on a peripheral side of the ball screw (37) and connected with the assembling hole (39), and the second drive portion (36) being able to drive the lifting body (31) to drive the cantilever component (40) to move along a vertical direction.

9. The sample analyzer as claimed in claim 6, wherein, the first transmission portion (32) comprises:
a first sleeve (321), the first sleeve (321) being connected with the lifting body (31), the transmission part being connected with the first sleeve (321), and the first sleeve (321) being rotatably arranged relative to the lifting body (31); the first sleeve (321) is sleeved on the drive shaft.

10. The sample analyzer as claimed in claim 9, wherein, a peripheral surface of the first sleeve (321) is fixedly provided with a second sleeve (322), the first sleeve (321) is connected with the lifting body (31) through the second sleeve (322), an end of the second sleeve (322) is connected with the transmission part, and the first sleeve (321) and the second sleeve (322) are rotatably arranged relative to the lifting body (31);
wherein, a peripheral surface of the second sleeve (322) is provided with engaging teeth in cooperation with the transmission part.

11. The sample analyzer as claimed in claim 4, wherein, the second transmission portion (33) comprises:
a transmission disc (331), the transmission disc (331) being moveably connected with the lifting body (31), the transmission disc (331) being connected with the transmission shaft (35), and the transmission disc (331) being able to drive the transmission shaft (35) to rotate;
wherein, a peripheral surface of the transmission disc (331) is provided with engaging teeth in cooperation with the transmission part.

12. The sample analyzer as claimed in claim 4, wherein, a first end of the cantilever body (41) is connected with the transmission shaft (35); and the cantilever component (40) further comprises:
an anti-collision mechanism (42), the anti-collision mechanism (42) being connected with a second end of the cantilever body (41); and
a reagent needle (43), the reagent needle (43) being connected with the anti-collision mechanism (42).

13. The sample analyzer as claimed in claim 1, wherein, the sample analyzer comprises a plurality of reagent discs (1) and the reagent filling devices (3) arranged corresponding to the plurality of reagent discs one by one.

14. The sample analyzer as claimed in claim 1, wherein, the reagent disc (1) has a plurality of circles of reagent bottles (200) along its radial direction, the reaction disc (2) is provided with a plurality of circles of reaction cups (100) along its radial direction, and the cantilever component (40) is configured to add the reagent in each layer of the reagent bottles (200) to the reaction cups (100) in the reaction disc (2).

15. The sample analyzer as claimed in claim 1, wherein, the plurality of circles of reagent bottles (200) comprise at least two circles of reagent bottles, and the two circles of reagent bottles comprise inner circle reagent bottles and outer circle reagent bottles, the plurality of circles of reaction cups (100) comprise at least two circles of reaction cups, and the two circles of reaction cups comprise inner circle reaction cups and outer circle reaction cups;
the first cantilever component (44) is configured to add the reagent in the inner circle reagent bottle to at least one of the inner circle reaction cups and the outer circle reaction cups, and the second cantilever component (45) is configured to add the reagent in the outer circle reagent bottle to at least one of the inner circle reaction cups and the outer circle reaction cups;
or, the first cantilever component (44) is configured to add the reagent in the outer circle reagent bottle to at least one of the inner circle reaction cups and the outer circle reaction cups, and the second cantilever component (45) is configured to add the reagent in the inner circle reagent bottle to at least one of the inner circle reaction cups and the outer circle reaction cups.

16. The sample analyzer as claimed in claim 15, wherein, an angle of rotation a of the first cantilever component (44) satisfies: 0<a≤120° , and/or, an angle of rotation b of the second cantilever component (45) satisfies: 0<b≤90° .

17. The sample analyzer as claimed in claim 16, wherein, the vertical lifting component (30) further comprises a supporting shaft sleeve (47), and the supporting shaft sleeve (47) is configured to support the first cantilever component (44).

## Patentansprüche

1. Ein Probenanalysator, umfassend eine Reagenzfüllvorrichtung (3), eine Reagenzträgerplatte (1) und eine Reaktionsgefäßplatte (2) mit mindestens einem Reaktionsgefäß (100),
wobei die Reaktionsgefäßplatte außerhalb der Reagenzträgerplatte angeordnet ist,
wobei die Reagenzfüllvorrichtung (3) umfasst:
eine Basis (10);
eine horizontale Rotationskomponente (20), wobei die horizontale Rotationskomponente (20) mit der Basis (10) verbunden ist;
eine vertikale Hebekomponente (30), wobei die vertikale Hebekomponente (30) mit der horizontalen Rotationskomponente (20) verbunden ist und in einer vertikalen Richtung relativ zur Basis (10) bewegbar ist; und
eine Auslegerkomponente (40), wobei die Auslegerkomponente (40) mit der vertikalen Hebekomponente (30) verbunden ist, wobei die vertikale Hebekomponente (30) dazu ausgebildet ist, die Auslegerkomponente (40) anzutreiben, um sich entlang der vertikalen Richtung zu bewegen, und wobei die Auslegerkomponente (40) relativ zur vertikalen Hebekomponente (30) drehbar angeordnet ist;
wobei eine Vielzahl von Auslegerkomponenten (40) vorgesehen ist,
wobei die Vielzahl von Auslegerkomponenten (40) in vertikaler Richtung versetzt angeordnet ist und auf derselben Seite der vertikalen Hebekomponente (30) angeordnet ist,
wobei jede Auslegerkomponente (40) einen Auslegerkörper (41) umfasst,
wobei eine Länge des Auslegerkörpers (41) mindestens einer Auslegerkomponente (40) der Vielzahl von Auslegerkomponenten (40) größer ist als die Länge des Auslegerkörpers (41) jeder der übrigen Auslegerkomponenten (40) der Vielzahl von Auslegerkomponenten (40),
und wobei jede Auslegerkomponente (40) dazu konfiguriert ist, ein Reagenz aus einer Reagenzträgerplatte (1) einem Reaktionsgefäß (100) in einer Reaktionsgefäßplatte (2) zuzugeben;
wobei die Vielzahl von Auslegerkomponenten (40) eine erste Auslegerkomponente (44) und eine zweite Auslegerkomponente (45) umfasst,
wobei eine Länge des Auslegerkörpers (41) der ersten Auslegerkomponente (44) größer ist als eine Länge des Auslegerkörpers (41) der zweiten Auslegerkomponente (45),
und wobei zwischen der ersten Auslegerkomponente (44) und der zweiten Auslegerkomponente (45) in vertikaler Richtung ein unterschiedlicher Abstand besteht;
wobei eine Vielzahl horizontaler Rotationskomponenten (20) und eine Vielzahl vertikaler Hebekomponenten (30) vorgesehen ist;
wobei die Vielzahl horizontaler Rotationskomponenten (20) in eins-zu-eins-Entsprechung mit der Vielzahl vertikaler Hebekomponenten (30) angeordnet ist;
und wobei jede Auslegerkomponente (40) entsprechend mit einer horizontalen Rotationskomponente (20) und einer vertikalen Hebekomponente (30) versehen ist;
**dadurch gekennzeichnet, dass** die Projektion des Rotationszentrums der Auslegerkomponente (40) auf eine horizontale Ebene in der Reagenzträgerplatte (1) positioniert ist.

2. Der Probenanalysator gemäß Anspruch 1, wobei die vertikale Hebekomponente (30) einen Hebekörper (31) umfasst, wobei ein erstes Ende des Hebekörpers (31) mit der horizontalen Rotationskomponente (20) verbunden ist, wobei ein anderes Ende des Hebekörpers (31) mit der Auslegerkomponente (40) verbunden ist, und wobei die Auslegerkomponente (40) eine Drehung durch den Hebekörper (31) realisiert.

3. Der Probenanalysator gemäß Anspruch 2, wobei die vertikale Hebekomponente (30) umfasst:
einen ersten Übertragungsabschnitt (32), wobei der erste Übertragungsabschnitt (32) an einem ersten Ende des Hebekörpers (31) angeordnet ist, und wobei der erste Übertragungsabschnitt (32) mit der horizontalen Rotationskomponente (20) verbunden ist;
einen zweiten Übertragungsabschnitt (33), wobei der zweite Übertragungsabschnitt (33) an einem zweiten Ende des Hebekörpers (31) angeordnet ist, und wobei die Auslegerkomponente (40) mit dem zweiten Übertragungsabschnitt (33) verbunden ist; und
ein Übertragungsteil, wobei ein erstes Ende des Übertragungsteils mit dem ersten Übertragungsabschnitt (32) verbunden ist, wobei ein zweites Ende des Übertragungsteils mit dem zweiten Übertragungsabschnitt (33) verbunden ist, wobei die horizontale Rotationskomponente (20) Kraft über den ersten Übertragungsabschnitt (32) und das Übertragungsteil auf den zweiten Übertragungsabschnitt (33) überträgt, um die Auslegerkomponente (40) zur Drehung anzutreiben.

4. Der Probenanalysator gemäß Anspruch 3, wobei die vertikale Hebekomponente (30) ferner umfasst:
eine Übertragungswelle (35), wobei der zweite Übertragungsabschnitt (33) mit einem Ende der Übertragungswelle (35) verbunden ist, wobei die Auslegerkomponente (40) mit einem anderen Ende der Übertragungswelle (35) verbunden ist, und wobei eine Achsenmitte der Übertragungswelle (35) das Rotationszentrum der Auslegerkomponente (40) bildet.

5. Der Probenanalysator gemäß Anspruch 4, wobei die Übertragungswelle (35) umfasst:
eine erste Übertragungswelle (351) und eine zweite Übertragungswelle (352), und wobei eine Länge der ersten Übertragungswelle (351) größer ist als eine Länge der zweiten Übertragungswelle (352).

6. Der Probenanalysator gemäß Anspruch 3, wobei die horizontale Rotationskomponente (20) umfasst:
einen ersten Antriebsabschnitt (211), wobei der erste Antriebsabschnitt (211) mit der Basis (10) verbunden ist; und
eine Antriebswelle, wobei die Antriebswelle mit dem ersten Antriebsabschnitt (211) verbunden ist, und wobei der erste Übertragungsabschnitt (32) auf eine Umfangsseite der Antriebswelle aufgeschoben ist, wobei der erste Antriebsabschnitt (211) so konfiguriert ist, dass er die Antriebswelle zur Drehung antreibt, wodurch die Antriebswelle den ersten Übertragungsabschnitt (32) zur Drehung antreibt.

7. Der Probenanalysator gemäß Anspruch 3, wobei der Hebekörper (31) mit einer Montagebohrung (39) versehen ist, und wobei die Montagebohrung (39) zwischen dem ersten Übertragungsabschnitt (32) und dem zweiten Übertragungsabschnitt (33) positioniert ist.

8. Der Probenanalysator gemäß Anspruch 7, wobei die vertikale Hebekomponente (30) umfasst:
einen zweiten Antriebsabschnitt (36), wobei der zweite Antriebsabschnitt (36) mit der Basis (10) verbunden ist;
einen Kugelgewindetrieb (37), wobei der Kugelgewindetrieb (37) mit dem zweiten Antriebsabschnitt (36) verbunden ist; und
eine Spindelmutter (38), wobei die Spindelmutter (38) auf eine Umfangsseite des Kugelgewindetriebs (37) aufgeschoben und mit der Montagebohrung (39) verbunden ist, und wobei der zweite Antriebsabschnitt (36) in der Lage ist, den Hebekörper (31) anzutreiben, um die Auslegerkomponente (40) entlang einer vertikalen Richtung zu bewegen.

9. Der Probenanalysator gemäß Anspruch 6, wobei der erste Übertragungsabschnitt (32) umfasst:
eine erste Hülse (321), wobei die erste Hülse (321) mit dem Hebekörper (31) verbunden ist, wobei das Übertragungsteil mit der ersten Hülse (321) verbunden ist, wobei die erste Hülse (321) drehbar in Bezug auf den Hebekörper (31) angeordnet ist und wobei die erste Hülse (321) auf die Antriebswelle aufgeschoben ist.

10. Der Probenanalysator gemäß Anspruch 9, wobei eine Umfangsfläche der ersten Hülse (321) fest mit einer zweiten Hülse (322) versehen ist, wobei die erste Hülse (321) mit dem Hebekörper (31) über die zweite Hülse (322) verbunden ist, wobei ein Ende der zweiten Hülse (322) mit dem Übertragungsteil verbunden ist, und wobei die erste Hülse (321) und die zweite Hülse (322) drehbar in Bezug auf den Hebekörper (31) angeordnet sind;
wobei eine Umfangsfläche der zweiten Hülse (322) mit einer Verzahnung in Zusammenwirkung mit dem Übertragungsteil versehen ist.

11. Der Probenanalysator gemäß Anspruch 4, wobei der zweite Übertragungsabschnitt (33) umfasst:
eine Übertragungsscheibe (331), wobei die Übertragungsscheibe (331) beweglich mit dem Hebekörper (31) verbunden ist, wobei die Übertragungsscheibe (331) mit der Übertragungswelle (35) verbunden ist, und wobei die Übertragungsscheibe (331) in der Lage ist, die Übertragungswelle (35) zur Drehung anzutreiben;
wobei eine Umfangsfläche der Übertragungsscheibe (331) mit einer Verzahnung in Zusammenwirkung mit dem Übertragungsteil versehen ist.

12. Der Probenanalysator gemäß Anspruch 4, wobei ein erstes Ende des Auslegerkörpers (41) mit der Übertragungswelle (35) verbunden ist; und wobei die Auslegerkomponente (40) ferner umfasst: einen Kollisionsschutzmechanismus (42), wobei der Kollisionsschutzmechanismus (42) mit einem zweiten Ende des Auslegerkörpers (41) verbunden ist; und eine Reagenznadel (43), wobei die Reagenznadel (43) mit dem Kollisionsschutzmechanismus (42) verbunden ist.

13. Der Probenanalysator gemäß Anspruch 1, wobei der Probenanalysator eine Vielzahl von Reagenzträgerplatten (1) und die Reagenzienfüllvorrichtungen (3) umfasst, die entsprechend der Vielzahl von Reagenzträgerplatten eins zu eins angeordnet sind.

14. Der Probenanalysator gemäß Anspruch 1, wobei die Reagenzträgerplatte (1) eine Vielzahl von Kreisen von Reagenzflaschen (200) entlang ihrer radialen Richtung aufweist, wobei die Reaktionsgefäßplatte (2) mit einer Vielzahl von Kreisen von Reaktionsgefäßen (100) entlang ihrer radialen Richtung versehen ist, und wobei die Auslegerkomponente (40) so konfiguriert ist, dass sie das in jeder Schicht der Reagenzflaschen (200) befindliche Reagenz in die Reaktionsgefäße (100) auf der Reaktionsgefäßplatte (2) zugibt.

15. Der Probenanalysator gemäß Anspruch 1, wobei die Vielzahl von Kreisen von Reagenzflaschen (200) mindestens zwei Kreise von Reagenzflaschen umfasst, und wobei die zwei Kreise von Reagenzflaschen innenliegende Reagenzflaschen und außenliegende Reagenzflaschen umfassen, wobei die Vielzahl von Kreisen von Reaktionsgefäßen (100) mindestens zwei Kreise von Reaktionsgefäßen umfasst, und wobei die zwei Kreise von Reaktionsgefäßen innenliegende Reaktionsgefäße und außenliegende Reaktionsgefäße umfassen;
wobei die erste Auslegerkomponente (44) so konfiguriert ist, dass sie das in der Reagenzflasche des innenliegenden Kreises befindliche Reagenz in mindestens eines der Reaktionsgefäße des innenliegenden Kreises und des außenliegenden Kreises zugibt, und wobei die zweite Auslegerkomponente (45) so konfiguriert ist, dass sie das in der Reagenzflasche des außenliegenden Kreises befindliche Reagenz in mindestens eines der Reaktionsgefäße des innenliegenden Kreises und des außenliegenden Kreises zugibt;
"oder wobei die erste Auslegerkomponente (44) so konfiguriert ist, dass sie das in der Reagenzflasche des außenliegenden Kreises befindliche Reagenz in mindestens eines der Reaktionsgefäße des innenliegenden Kreises und des außenliegenden Kreises zugibt, und wobei die zweite Auslegerkomponente (45) so konfiguriert ist, dass sie das in der Reagenzflasche des innenliegenden Kreises befindliche Reagenz in mindestens eines der Reaktionsgefäße des innenliegenden Kreises und des außenliegenden Kreises zugibt."

16. Der Probenanalysator gemäß Anspruch 15, wobei ein Drehwinkel a der ersten Auslegerkomponente (44) die Bedingung 0 < a ≤ 120° erfüllt, und/oder ein Drehwinkel b der zweiten Auslegerkomponente (45) die Bedingung 0 < *b* ≤ 90° erfüllt.

17. Der Probenanalysator gemäß Anspruch 16, wobei die vertikale Hebekomponente (30) ferner eine Stützwellenhülse (47) umfasst, und wobei die Stützwellenhülse (47) so konfiguriert ist, dass sie die erste Auslegerkomponente (44) stützt.

## Revendications

1. Un analyseur d'échantillon, comprenant un dispositif de remplissage de réactifs (3), un disque porte-réactifs (1) et un disque de récipients de réaction (2) comportant au moins une cuve de réaction (100), dans lequel le disque de récipients de réaction est disposée à l'extérieur du disque porte-réactifs ;
le dispositif de remplissage de réactifs comprenant :
une base (10) ;
un composant de rotation horizontale (20), le composant de rotation horizontale (20) étant relié à la base (10) ;
un composant de levage vertical (30), le composant de levage vertical (30) étant relié au composant de rotation horizontale (20), et le composant de levage vertical (30) étant mobile dans une direction verticale par rapport à la base (10) ; et
un composant de bras en porte-à-faux (40), le composant de bras en porte-à-faux (40) étant relié au composant de levage vertical (30), le composant de levage vertical (30) étant apte à entraîner le composant de bras en porte-à-faux (40) pour se déplacer le long de la direction verticale, le composant de bras en porte-à-faux (40) étant agencé de façon rotative par rapport au composant de levage vertical (30) ;
le dispositif comprenant une pluralité de composants de bras en porte-à-faux (40), la pluralité de composants de bras en porte-à-faux (40) étant agencés de manière étagée le long de la direction verticale, et la pluralité de composants de bras en porte-à-faux (40) étant agencés sur un même côté du composant de levage vertical (30) ;
chaque composant de bras en porte-à-faux (40) comprenant un corps de bras en porte-à-faux (41), une longueur du corps de bras en porte-à-faux (41) d'au moins un composant de bras en porte-à-faux (40) de la pluralité de composants de bras en porte-à-faux (40) étant supérieure à une longueur d'un corps de bras en porte-à-faux (41) de chacun des composants de bras en porte-à-faux (40) restants de la pluralité de composants de bras en porte-à-faux (40), et chaque composant de bras en porte-à-faux (40) étant configuré pour ajouter un réactif contenu dans le disque porte-réactifs (1) à une cuve de réaction (100) situé dans le disque de récipients de réaction (2) ;
la pluralité de composants de bras en porte-à-faux (40) comprend un premier composant de bras en porte-à-faux (44) et un deuxième composant de bras en porte-à-faux (45), et une longueur d'un corps de bras en porte-à-faux (41) du premier composant de bras en porte-à-faux (44) est supérieure à une longueur d'un corps de bras en porte-à-faux (41) du deuxième composant de bras en porte-à-faux (45), une hauteur entre le premier composant de bras en porte-à-faux (44) et le deuxième composant de bras en porte-à-faux (45) dans une direction verticale étant différente ;
dans lequel, il y a une pluralité de composants de rotation horizontale (20) et une pluralité de composants de levage vertical (30) ; la pluralité de composants de rotation horizontale (20) sont agencés en correspondance avec la pluralité de composants de levage vertical (30) un à un ; et chaque composant de bras en porte-à-faux (40) est pourvu d'un composant de rotation horizontale (20) et d'un composant de levage vertical (30) de manière correspondante ;
**caractérisé en ce que** :
une projection d'un centre de rotation du composant de bras en porte-à-faux (40) sur un plan horizontal est positionnée dans le disque porte-réactifs (1).

2. L'analyseur d'échantillon selon la revendication 1, dans lequel le composant de levage vertical (30) comprend :
un corps de levage (31), une première extrémité du corps de levage (31) étant reliée au composant de rotation horizontale (20), une autre extrémité du corps de levage (31) étant reliée au composant de bras en porte-à-faux (40), et le composant de bras en porte-à-faux (40) réalisant une rotation par l'intermédiaire du corps de levage (31) ;

3. L'analyseur d'échantillon selon la revendication 2, dans lequel le composant de levage vertical (30) comprend :
une première partie de transmission (32), la première partie de transmission (32) étant agencée sur la première extrémité du corps de levage (31), et la première partie de transmission (32) étant reliée au composant de rotation horizontale (20)
une deuxième partie de transmission (33), la deuxième partie de transmission (33) étant agencée sur une deuxième extrémité du corps de levage (31), et le composant de bras en porte-à-faux (40) étant relié à la deuxième partie de transmission (33) ; et
une pièce de transmission, une première extrémité de la pièce de transmission étant reliée à la première partie de transmission (32), une deuxième extrémité de la pièce de transmission étant reliée à la deuxième partie de transmission (33), le composant de rotation horizontale (20) transmettant la puissance à la deuxième partie de transmission (33) par l'intermédiaire de la première partie de transmission (32) et de la pièce de transmission, de manière à entraîner le composant de bras en porte-à-faux (40) en rotation ;

4. L'analyseur d'échantillon selon la revendication 3, dans lequel le composant de levage vertical (30) comprend en outre :
un arbre de transmission (35), la deuxième partie de transmission (33) étant reliée à une extrémité de l'arbre de transmission (35), le composant de bras en porte-à-faux (40) étant relié à une autre extrémité de l'arbre de transmission (35), et un centre d'axe de l'arbre de transmission (35) étant le centre de rotation du composant de bras en porte-à-faux (40).

5. L'analyseur d'échantillon selon la revendication 4, dans lequel l'arbre de transmission (35) comprend :
un premier arbre de transmission (351) et un deuxième arbre de transmission (352), et une longueur du premier arbre de transmission (351) étant supérieure à une longueur du deuxième arbre de transmission (352).

6. L'analyseur d'échantillon selon la revendication 3, dans lequel le composant de rotation horizontale (20) comprend :
une première partie d'entraînement (211), la première partie d'entraînement (211) étant reliée à la base (10) ; et
un arbre d'entraînement, l'arbre d'entraînement étant relié à la première partie d'entraînement (211), la première partie de transmission (32) étant emmanchée sur un côté périphérique de l'arbre d'entraînement, la première partie d'entraînement (211) étant configurée pour entraîner l'arbre d'entraînement en rotation, de telle sorte que l'arbre d'entraînement entraîne la première partie de transmission (32) en rotation.

7. L'analyseur d'échantillon selon la revendication 3, dans lequel le corps de levage (31) est pourvu d'un trou d'assemblage (39), y le trou d'assemblage (39) étant positionné entre la première partie de transmission (32) et la deuxième partie de transmission (33).

8. L'analyseur d'échantillon selon la revendication 7, dans lequel le composant de levage vertical (30) comprend :
une deuxième partie d'entraînement (36), la deuxième partie d'entraînement (36) étant reliée à la base (10) ;
une vis à billes (37), la vis à billes (37) étant reliée à la deuxième partie d'entraînement (36) ; et
un écrou (38) de la vis à billes (37), l'écrou (38) étant emmanché sur un côté périphérique de la vis à billes (37) et relié au trou d'assemblage (39), et la deuxième partie d'entraînement (36) étant apte à entraîner le corps de levage (31) pour entraîner le composant de bras en porte-à-faux (40) à se déplacer le long d'une direction verticale.

9. L'analyseur d'échantillon selon la revendication 6, dans lequel la première partie de transmission (32) comprend :
un premier manchon (321), le premier manchon (321) étant relié au corps de levage (31), la pièce de transmission étant reliée au premier manchon (321), et le premier manchon (321) étant agencé de manière rotative par rapport au corps de levage (31) ; le premier manchon (321) est emmanché sur l'arbre d'entraînement.

10. L'analyseur d'échantillon selon la revendication 9, dans lequel une surface périphérique du premier manchon (321) est pourvue de manière fixe d'un deuxième manchon (322), le premier manchon (321) étant relié au corps de levage (31) par l'intermédiaire du deuxième manchon (322), une extrémité du deuxième manchon (322) étant reliée à la pièce de transmission, et le premier manchon (321) et le deuxième manchon (322) étant agencés de manière rotative par rapport au corps de levage (31) ;
dans lequel une surface périphérique du deuxième manchon (322) est pourvue de dents d'engrènement qui coopèrent avec la pièce de transmission.

11. L'analyseur d'échantillon selon la revendication 4, dans lequel la deuxième partie de transmission (33) comprend :
un disque de transmission (331), le disque de transmission (331) étant relié de manière mobile au corps de levage (31), le disque de transmission (331) étant relié à l'arbre de transmission (35), et le disque de transmission (331) étant apte à entraîner l'arbre de transmission (35) en rotation ;
dans lequel une surface périphérique du disque de transmission (331) est pourvue de dents d'engrènement qui coopèrent avec la pièce de transmission.

12. L'analyseur d'échantillon selon la revendication 4, dans lequel une première extrémité du corps de bras en porte-à-faux (41) est reliée à l'arbre de transmission (35) ; et le composant de bras en porte-à-faux (40) comprend en outre :
un mécanisme anti-collision (42), le mécanisme anti-collision (42) étant relié à une deuxième extrémité du corps de bras en porte-à-faux (41) ; et
une aiguille de réactif (43), l'aiguille de réactif (43) étant reliée au mécanisme anti-collision (42).

13. L'analyseur d'échantillon selon la revendication 1, dans lequel l'analyseur d'échantillon comprend une pluralité de plateaux de réactifs (1) et les dispositifs de remplissage de réactif (3) agencés en correspondance avec la pluralité de plateaux de réactifs de manière biunivoque.

14. L'analyseur d'échantillon selon la revendication 1, dans lequel le disque porte-réactifs (1) comporte une pluralité de cercles de flacons de réactifs (200) le long de sa direction radiale, le disque de récipients de réaction (2) étant pourvue d'une pluralité de cercles de cuves de réaction (100) le long de sa direction radiale, et le composant de bras en porte-à-faux (40) étant configuré pour ajouter le réactif contenu dans chaque couche de flacons de réactifs (200) aux cuves de réaction (100) situées dans le disque de récipients de réaction (2).

15. L'analyseur d'échantillon selon la revendication 1, dans lequel la pluralité de cercles de flacons de réactifs (200) comprend au moins deux cercles de flacons de réactifs, les deux cercles de flacons de réactifs comprenant des flacons de réactifs du cercle intérieur et des flacons de réactifs du cercle extérieur, la pluralité de cercles de cuves de réaction (100) comprenant au moins deux cercles de cuves de réaction, les deux cercles de cuves de réaction comprenant des cuves de réaction du cercle intérieur et des cuves de réaction du cercle extérieur ;
le premier composant de bras en porte-à-faux (44) est configuré pour ajouter le réactif contenu dans le flacon de réactifs du cercle intérieur à au moins l'une parmi les cuves de réaction du cercle intérieur et les cuves de réaction du cercle extérieur, le deuxième composant de bras en porte-à-faux (45) étant configuré pour ajouter le réactif contenu dans le flacon de réactifs du cercle extérieur à au moins l'une parmi les cuves de réaction du cercle intérieur et les cuves de réaction du cercle extérieur ;
ou, le premier composant de bras en porte-à-faux (44) est configuré pour ajouter le réactif contenu dans le flacon de réactifs du cercle extérieur à au moins l'une parmi les cuves de réaction du cercle intérieur et les cuves de réaction du cercle extérieur, le deuxième composant de bras en porte-à-faux (45) étant configuré pour ajouter le réactif contenu dans le flacon de réactifs du cercle intérieur à au moins l'une parmi les cuves de réaction du cercle intérieur et les cuves de réaction du cercle extérieur.

16. L'analyseur d'échantillon selon la revendication 15, dans lequel un angle de rotation a du premier composant de bras en porte-à-faux (44) satisfait la condition : 0 < a ≤ 120°, et/ou, un angle de rotation b du deuxième composant de bras en porte-à-faux (45) satisfait la condition : 0 < b ≤ 90°.

17. L'analyseur d'échantillon selon la revendication 16, dans lequel le composant de levage vertical (30) comprend en outre un manchon d'arbre de support (47), le manchon d'arbre de support (47) étant configuré pour supporter le premier composant de bras en porte-à-faux (44).
